# EUROPÄISCHE PATENTANMELDUNG

(11) **EP 1 914 524 A1**
(43) Veröffentlichungstag der Anmeldung: **23.04.2008**
(21) Anmeldenummer: 07020012.6
(22) Anmeldetag: 12.10.2007
(51) Int. Cl.: G01D 5/347, G01V 8/10, G02B 1/04, G02B 3/08

(54) **Optoelektronische Sensorvorrichtung**

(30) Priorität: 18.10.2006 DE 102006049178
(71) Anmelder: Sensopart Industriesensorik GmbH, 79695 Wieden (DE)
(72) Erfinder: Meinert, Thomas, 79312 Emmendingen (DE)
(74) Vertreter: Goy, Wolfgang

(57) **Zusammenfassung**

Eine optoelektronische Sensorvorrichtung weist einen Sender 4 mit zugeordneter Senderoptik 2 sowie einen Empfänger 5 mit zugeordneter Empfängeroptik 3 auf. Die Senderoptik 2 besteht dabei aus einem Kunststoffmaterial und ist kombiniert diffraktiv sowie refraktiv ausgebildet.

## Beschreibung

Die Erfindung betrifft eine optoelektronische Sensorvorrichtung nach dem Oberbegriff des Anspruchs 1.

Bei der Erfindung geht es allgemein um optoelektronische Sensorvorrichtungen, insbesondere unter Verwendung von Laserlicht. Besondere Anwendungsgebiete sind Lichtschranken, Lichttaster, Triangulationssensoren sowie Laufzeitsensoren.

Um beispielsweise bei Laserlichtschranken oder Laserlichttastern hohe Ortsauflösungen innerhalb eines vorgegebenen Abstands- und Temperaturbereichs sicherzustellen, müssen bislang teure Glasoptiken eingesetzt werden, um den für Kunststoffe typischen Temperaturgang zu vermeiden. Neben den hohen Kosten für die Bauteile wirkt sich dabei insbesondere die aufwendige mechanische Integration der Glasoptiken in die Sensorkonstruktion negativ auf die Herstellungskosten der optoelektronischen Sensorvorrichtung aus.

Davon ausgehend liegt der Erfindung die **Aufgabe** zugrunde, eine optoelektronische Sensorvorrichtung der eingangs angegebenen Art zu schaffen, welche einerseits preiswert ist und welche andererseits eine temperaturstabile Fokuslage der Optik gewährleistet.

Die technische **Lösung** ist gekennzeichnet durch die Merkmale im Kennzeichen des Anspruchs 1.

Dadurch ist eine optoelektronische Sensorvorrichtung für verschiedene Anwendungsgebiete geschaffen, welche durch die Verwendung von Kunststoffmaterial sehr preiswert ist und dennoch eine temperaturstabile Fokuslage gewährleistet. Die Erfindung schlägt somit durch den Aufbau einer Kunststoffoptik im Vergleich zu einer Glasoptik eine deutlich kostengünstigere Lösung vor. Die Grundidee besteht somit darin, daß die dem Sender zugeordnete optische Einheit aus Kunststoff besteht, wobei diese Kunststoffeinheit zum einen diffraktiv und zum anderen refraktiv ausgebildet ist. Die Kombination dieser beiden Systeme hat den Vorteil, daß sich Temperaturänderungen kompensieren, da sie entgegengerichtet sind. Diffrakiv wirkende Optiken können dabei für kleine Aperturen <= 0,1 in einer 8-stufigen Binärstruktur mit einem Wirkungsgrad von > 0,9 ausgeführt werden und sind in einem Kunststoffmaterial abformbar. Beispielsweise können die diffraktiven Strukturen auf das Kunststoffmaterial aufgedruckt werden. Da diffraktiv wirkende Optiken nur von der Wellenlänge und der Periodenstruktur an der optisch wirksamen Grenzfläche abhängig sind, unterliegen sie nicht dem Nachteil eines hohen Temperaturkoeffizienten des Brechungsindex. Bei stabiler Wellenlänge läßt sich somit eine temperaturstabile Fokuslage des Laserspots erzeugen. Reale Laserdioden weisen jedoch einen positiven Temperaturkoeffizienten über die Wellenlänge auf. Der negative Temperaturkoeffizient über dem Brechungsindex des Kunststoffs kann somit zur Fehlerkompensation herangezogen werden, indem die refraktiv wirkende Grenzfläche als optisch wirksam ausgeführt ist. In erster Näherung wird durch Halbierung der erforderlichen Brechkraft auf die diffraktiv und refraktiv wirkenden Grenzflächen das Ziel eines mit kunststoffoptischen Bauelementen erzeugten temperaturstabilen Laserspots erreicht. Somit weist die Senderoptik eine erste, diffraktiv wirkende Grenzfläche und eine zweite, als lichtbrechende Fläche ausgeführte refraktive Grenzfläche auf. Für die temperaturstabile Fokuslage wird die Änderung des Brechungsindex n über der Temperatur dn/dT genutzt.

Die Weiterbildung gemäß Anspruch 2 schlägt vor, daß auf der einen Seite des Kunststoffkörpers die diffraktive Grenzfläche und auf der anderen Seite des Kunststoffkörpers die refraktive Grenzfläche ausgebildet ist.

Vorzugsweise ist dabei gemäß der Weiterbildung in Anspruch 3 die Senderoptik auf der dem Sender zugewandten Seite diffraktiv und auf der dem Sender abgewandten Seite refraktiv ausgebildet. Somit liegen die diffraktiven Strukturen vorzugsweise auf der dem Geräteinnern zugewandten Seite des kunststoffoptischen Bauteils.

Die Weiterbildung gemäß Anspruch 4 schlägt vor, daß die Empfängeroptik ebenfalls aus einem Kunststoffmaterial besteht und daß die Empfängeroptik als Fresnellinse ausgebildet ist. Indem die optische Grenzfläche der Empfängeroptik als Fresnelstruktur ausgebildet ist, kann dadurch die Dicke des Bauelements klein gehalten werden.

Auch hier ist gemäß der Weiterbildung in Anspruch 5 die Fresnelstruktur der Empfängeroptik vorzugsweise auf der dem Geräteinneren zugewandten Seite des kunststoffoptischen Bauteils angeordnet.

Die Weiterbildung gemäß Anspruch 6 schlägt eine erste Ausführungsform der Anordnung der Senderoptik und der Empfängeroptik vor. Bei dieser Ausführungsvariante handelt es sich um ein 2-Augen-Design.

Die zweite Ausführungsform in Fig. 7, bei der die Senderoptik im Innern der Empfängeroptik liegt, handelt es sich um ein Quasi-Autokollimationsdesign.

Die Weiterbildung gemäß Anspruch 8 schlägt vor, daß die Senderoptik niederaperturig und die Empfängeroptik hochaperturig ausgebildet ist. Somit ist eine niederaperturige Senderoptik mit einem Bauteil mit einer hochaperturigen Empfängeroptik kombiniert. Die Empfängeroptik ist dabei als konventionelles refraktiv arbeitendes Element ausgelegt, vorzugsweise als Fresnellinse. Als niederaperturige Senderoptik werden numerische Aperturen <= 0,1 angesehen, d. h. die Brennweite der Optik beträgt mindestens das 5-fache der von deren freien Öffnung. Optiken mit derartigen Aperturen können bis zu 20 % der Emmissionsleistung einer Laserdiode übertragen. Mit einer typischen Laserdiode von 5 mW optischer Leistung kann somit noch der Sicherheitsgrenzwert von 1 mW an ausgekoppelter Leistung erreicht werden. Um eine gewünschte möglichst hohe Bestrahlungsstärke auf dem Empfänger zu erhalten, muß die Brechkraft der Empfängeroptik möglichst groß gewählt sein. Dies bedeutet, daß deren numerische Apertur an die Grenze des physikalisch sinnvollen und technisch machbaren zu legen ist. Für refraktiv wirkende Optiken aus Kunststoff liegt diese Grenze bei ca. 0,5.

Eine bevorzugte Weiterbildung schlägt Anspruch 9 dahingehend vor, daß die Senderoptik und die Empfängeroptik als einstückiges Bauteil ausgebildet sind. Somit wird vorgeschlagen, Senderoptik und Empfängeroptik in einem kunststoffoptischen Bauelement zu integrieren, wobei die Senderoptik eine diffraktiv wirkende erste Grenzfläche aufweist und die zweite Grenzfläche als lichtbrechende Fläche ausgeführt ist, während die beiden Grenzflächen der Empfängeroptik ebenfalls als lichtbrechende Flächen wirksam sind.

Schließlich schlägt die Weiterbildung gemäß Anspruch 10 vor, daß das Bauteil als Frontscheibe für die optoelektronische Sensorvorrichtung ausgebildet ist. Das Bauelement ist somit durch die Ausbildung als Frontscheibe das Lichtaustrittsfenster sowie das Lichteintrittsfenster des optischen Sensors.

Zwei Ausführungsbeispiele einer optoelektronischen Sensorvorrichtung werden nachfolgend anhand der Zeichnungen beschrieben. In diesen zeigt:
- Fig. 1: eine schematische Schnittansicht durch die erste Ausführungsform der optoelektronischen Sensorvorrichtung;
- Fig. 2: eine Draufsicht auf die Frontscheibe der optoelektronischen Sensorvorrichtung in Fig. 1;
- Fig. 3: eine schematische Schnittansicht durch die zweite Ausführungsform der optoelektronischen Sensorvorrichtung;
- Fig. 4: eine Draufsicht auf die Frontscheibe der optoelektronischen Sensorvorrichtung in Fig. 3;

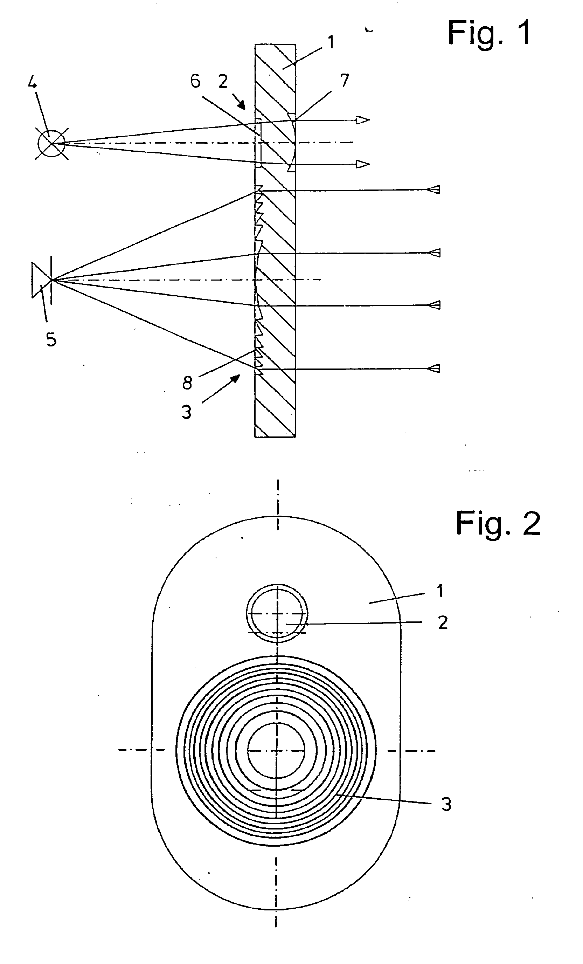

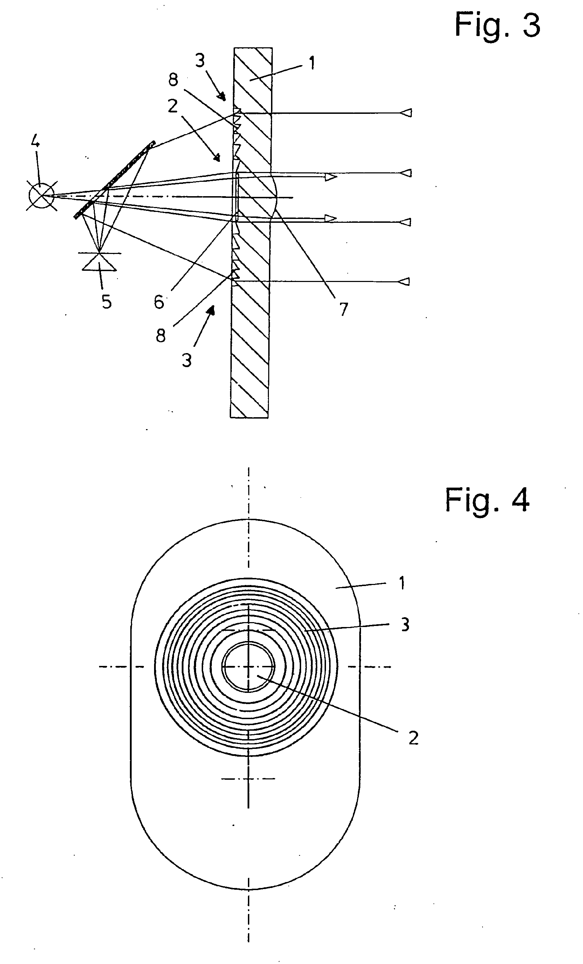

In den Fig. 1 und 2 ist eine erste Ausführungsform und in Fig. 3 und 4 eine zweite Ausführungsform einer optoelektronischen Sensorvorrichtung dargestellt, wobei es sich hier beispielsweise um eine Laserlichtschranke handeln kann.

Die erste Ausführungsform in den Fig. 1 und 2 besitzt eine Kunststoffscheibe 1, welche zugleich als Frontscheibe eines - nicht dargestellten - Gehäuses der optoelektronischen Sensorvorrichtung dient.

Die Kunststoffscheibe 1 definiert eine Senderoptik 2 sowie eine Empfängeroptik 3. Dabei ist der Senderoptik 3 ein Sender 4 und der Empfängeroptik 3 ein Empfänger 5 zugeordnet.

Die Senderoptik 2 besitzt auf der dem Sender 4 zugeordneten Seite eine diffraktive (beugende) Struktur 6 und auf der dem Sender 4 abgewandten Seite eine refraktive (brechende) Struktur.

Die Empfängeroptik 3 besitzt auf der dem Empfänger 5 zugewandten Seite eine refraktive Struktur 8 in Form einer Fresnellinse.

### Die Funktionsweise ist wie folgt:

Der Sender 4 sendet Laserlicht aus, welches zunächst die diffraktive Struktur 6 und anschließend die refraktive Struktur 7 der Senderoptik 2 passiert. Da sich Temperaturänderungen gegenseitig kompensieren, wird durch dieses System eine temperaturstabile Fokuslage definiert.

Die reflektierte Strahlung passiert die Kunststoffscheibe 1 im Bereich der Empfängeroptik 3 und wird vom Empfänger 5 detektiert.

Die Ausführungsform in den Fig. 3 und 4 unterscheidet sich von der Ausführungsform in den Fig. 1 und 2 dadurch, daß hier die Senderoptik 2 in der Mitte der Empfängeroptik 3 liegt, wobei - nach wie vor - die Senderoptik 2 eine kombinierte diffraktive Struktur 6 sowie refraktive Struktur 7 und die Empfängeroptik 3 eine refraktive Struktur 8 besitzt.

### Bezugszeichenliste

- 1: Kunststoffscheibe
- 2: Senderoptik
- 3: Empfängeroptik
- 4: Sender
- 5: Empfänger
- 6: diffraktive Struktur
- 7: refraktive Struktur
- 8: refraktive Struktur

## Patentansprüche

1. Optoelektronische Sensorvorrichtung
mit einem Sender (4) mit zugeordneter Senderoptik (2) sowie mit einem Empfänger (5) mit zugeordneter Empfängeroptik (3),
**dadurch gekennzeichnet,**
**daß** die Senderoptik (2) aus einem Kunststoffmaterial besteht und daß die Senderoptik (2) kombiniert diffraktiv sowie refraktiv ausgebildet ist.

2. Optoelektronische Sensorvorrichtung nach dem vorgehenden Anspruch,
**dadurch gekennzeichnet,**
**daß** die Senderoptik (2) auf der einen Seite diffraktiv und auf der anderen Seite refraktiv ausgebildet ist.

3. Optoelektronische Sensorvorrichtung nach Anspruch 2,
**dadurch gekennzeichnet,**
**daß** die Senderoptik (2) auf der dem Sender (4) zugewandten Seite diffraktiv und auf der dem Sender (4) abgewandten Seite refraktiv ausgebildet ist.

4. Optoelektronische Sensorvorrichtung nach einem der vorhergehenden Ansprüche,
**dadurch gekennzeichnet,**
**daß** die Empfängeroptik (3) aus einem Kunststoffmaterial besteht und daß die Empfängeroptik (3) als Fresnellinse ausgebildet ist.

5. Optoelektronische Sensorvorrichtung nach Anspruch 4,
**dadurch gekennzeichnet,**
**daß** die Fresnelstrukturen auf der dem Empfänger (5) zugewandten Seite ausgebildet sind.

6. Optoelektronische Sensorvorrichtung nach einem der Ansprüche 1 bis 5,
**dadurch gekennzeichnet,**
**daß** die Senderoptik (2) und die Empfängeroptik (3) nebeneinander angeordnet sind.

7. Optoelektronische Sensorvorrichtung nach einem der Ansprüche 1 bis 5,
**dadurch gekennzeichnet,**
**daß** die Senderoptik (2) und die Empfängeroptik (3) koaxial zueinander angeordnet sind.

8. Optoelektronische Sensorvorrichtung nach einem vorhergehenden Ansprüche,
**dadurch gekennzeichnet,**
**daß** die Senderoptik (2) niederaperturig und die Empfängeroptik (3) hochaperturig ausgebildet ist.

9. Optoelektronische Sensorvorrichtung nach einem der vorhergehenden Ansprüche,
**dadurch gekennzeichnet,**
**daß** die Senderoptik (2) und die Empfängeroptik (3) als einstückiges Bauteil ausgebildet sind.

10. Optoelektronische Sensorvorrichtung nach Anspruch 9,
**dadurch gekennzeichnet,**
**daß** das Bauteil als Frontscheibe für die optoelektronische Sensorvorrichtung ausgebildet ist.
